# EUROPEAN PATENT APPLICATION

(11) **EP 4 783 431 A1**
(43) Date of publication of application: **29.07.2026**
(21) Application number: 24903282.2
(22) Date of filing: 30.09.2024
(51) Int. Cl.: H02K 7/116, H02K 9/19

(54) **VEHICULAR DRIVE DEVICE**

(30) Priority: 15.12.2023 JP 2023211972
(71) Applicant: AISIN CORPORATION, Kariya-shi, Aichi 448-8650 (JP)
(72) Inventor: HATTORI Nakatsune, Kariya-shi, Aichi 448-8650 (JP); KITAGAWA Rei, Kariya-shi, Aichi 448-8650 (JP)
(74) Representative: Kramer Barske Schmidtchen Patentanwälte PartG mbB
(86) International application number: PCT/JP2024/034900
(87) International publication number: WO 2025/126619

(57) **Abstract**

A vehicular drive device (100) includes a rotating electrical machine (1), a pair of output members (3), a reduction mechanism (4), and a differential gear mechanism (5). The reduction mechanism (4) decelerates the rotation of the rotating electrical machine (1). The differential gear mechanism (5) distributes rotation transmitted from the reduction mechanism (4) to the pair of output members (3). The reduction mechanism (4) includes a first gear (4A) rotated by the rotating electrical machine (1), a first counter gear mechanism (41), a second counter gear mechanism (42), and a sixth gear (4F). The first counter gear mechanism (41) is coupled to the first gear (4A). The second counter gear mechanism (42) is coupled to the first counter gear mechanism (41). The sixth gear (4F) drivingly couples the second counter gear mechanism (42) to the differential gear mechanism (5).

## Description

### TECHNICAL FIELD

The present invention relates to a vehicular drive device including a rotating electrical machine including a rotor and a reduction mechanism that decelerates the rotation of the rotor.

### BACKGROUND ART

An example of such a vehicular drive device is disclosed in Patent Literature 1 below. Hereinafter, in the description of the background art, reference numerals and names in Patent Literature 1 are cited in parentheses.

A vehicular drive device (electric drive unit 1 for vehicle) described in Patent Literature 1 includes a rotating electrical machine (electric motor 3), a reduction mechanism (T), a differential transmission mechanism (differential device D), and a pair of output members (left and right output shafts 10L and 10R). The rotation of a rotor (rotor shaft 4) of the rotating electrical machine (electric motor 3) is decelerated by the reduction mechanism (T) and transmitted to the pair of output members (left and right output shafts 10L and 10R) via the differential gear mechanism (differential device D).

The reduction mechanism (4) of the vehicular drive device (electric drive unit 1 for vehicle) described in Patent Literature 1 consists of a pair of counter gear mechanisms disposed in parallel with the rotor (rotor shaft 4). Each of the pair of counter gear mechanisms includes a second gear (speed reducing gear 15) meshing with a first gear (pinion gear 8) that rotates integrally with the rotor (rotor shaft 4), and a third gear (speed reducing gear 16) that rotates integrally with the second gear (speed reducing gear 15) and transmits the rotation to the differential gear mechanism (differential device D). The third gear meshes with a fourth gear (ring gear 20) included in the differential gear mechanism (differential device D) to transmit the rotation to the differential gear mechanism (differential device D).

### CITATIONS LIST

### PATENT LITERATURE

Patent Literature 1: JP 2019-173833 A

### SUMMARY OF INVENTION

### TECHNICAL PROBLEMS

To increase the reduction ratio of the reduction mechanism (T) described in Patent Literature 1, it is necessary to increase the radial dimensions of the second gears (speed reducing gears 15) and the fourth gear (ring gear 20). That is, when the reduction ratio of the reduction mechanism (T) is increased, the vehicular drive device (electric drive unit 1 for vehicle) tends to increase in size in the radial direction.

It is thus desired to provide a vehicular drive device that can be easily reduced in size while a reduction mechanism included therein has a high reduction ratio.

### SOLUTIONS TO PROBLEMS

A characteristic configuration of a vehicular drive device in view of the above is a vehicular drive device including a rotating electrical machine including a rotor, a pair of output members drivingly coupled to respective wheels, a reduction mechanism configured to decelerate rotation of the rotor, and a differential gear mechanism including a differential input member to distribute rotation transmitted from the reduction mechanism to the differential input member to the pair of output members, in which the rotor, the pair of output members, and the differential gear mechanism are disposed on a first axis, and the reduction mechanism includes a first gear disposed on the first axis and coupled to the rotor so as to rotate integrally with the rotor, a first counter gear mechanism including a second gear meshing with the first gear and a third gear coupled to the second gear so as to rotate integrally with the second gear, the first counter gear mechanism being disposed on a second axis that is an axis different from the first axis, a second counter gear mechanism including a fourth gear meshing with the third gear and a fifth gear coupled to the fourth gear so as to rotate integrally with the fourth gear, the second counter gear mechanism being disposed on a third axis that is an axis different from the first axis and the second axis, and a sixth gear disposed on the first axis, the sixth gear meshing with the fifth gear and being coupled to the differential input member so as to rotate integrally with the differential input member.

According to this characteristic configuration, before the rotation of the rotor is transmitted to the differential gear mechanism, the rotation can be decelerated at three points, a meshing portion of the first gear and the second gear, a meshing portion of the third gear and the fourth gear, and a meshing portion of the fifth gear and the sixth gear. Consequently, as compared with a configuration including only one counter gear mechanism between the rotor and the differential gear mechanism, the diameters of a plurality of gears can be easily reduced while a sufficient reduction ratio is maintained. Therefore, the size of the entire vehicular drive device can be easily reduced. Further, according to this configuration, the reduction mechanism can include a relatively simple combination of gears. Consequently, as compared with a configuration using a planetary gear mechanism as the reduction mechanism, the transmission efficiency can be easily increased and the manufacturing costs can be easily reduced.

### BRIEF DESCRIPTION OF DRAWINGS

FIG. 1 is a cross-sectional view of a vehicular drive device according to an embodiment.
FIG. 2 is a skeleton diagram of the vehicular drive device according to the embodiment.
FIG. 3 is a diagram illustrating the positional relationships between elements as viewed in an axial direction in the vehicular drive device according to the embodiment.
FIG. 4 is a cross-sectional view illustrating a refrigerant flow path in the vehicular drive device according to the embodiment.

### DESCRIPTION OF EMBODIMENTS

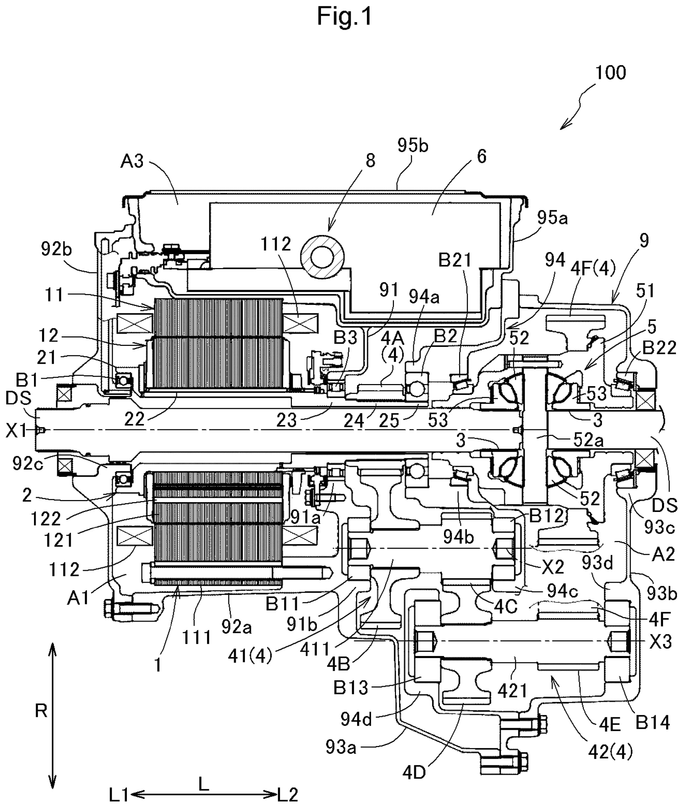

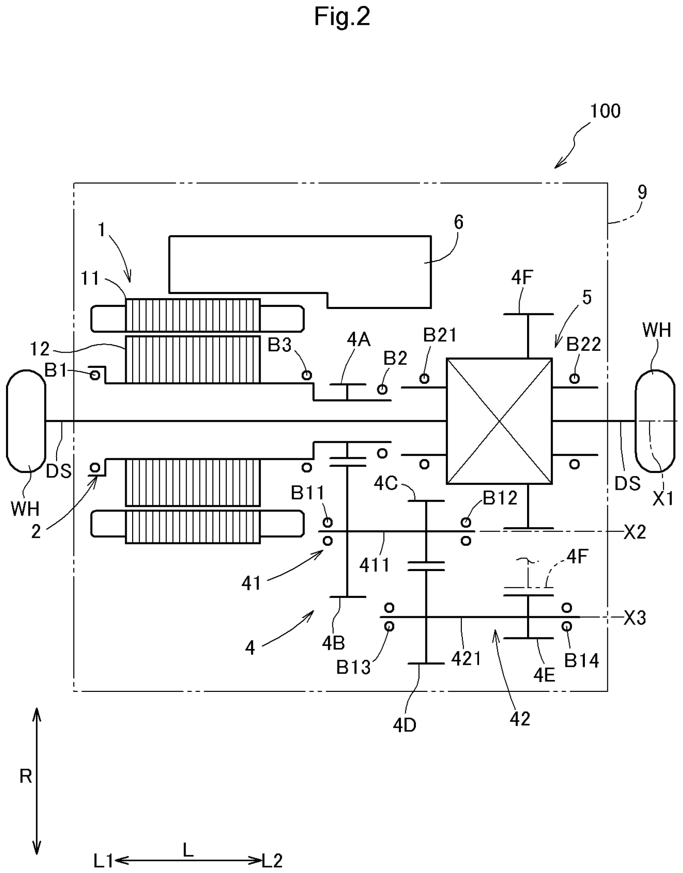

A vehicular drive device 100 according to an embodiment will be described with reference to FIGS. 1 to 4. As illustrated in FIGS. 1 and 2, the vehicular drive device 100 includes a rotating electrical machine 1 including a rotor 12, a pair of output members 3 drivingly coupled to respective wheels WH, a reduction mechanism 4, a differential gear mechanism 5, and a case 9. The reduction mechanism 4 and the differential gear mechanism 5 drivingly couple the rotor 12 to the output members 3. The case 9 illustrated in FIG. 1 houses the rotating electrical machine 1, the reduction mechanism 4, and the differential gear mechanism 5. In the present embodiment, the vehicular drive device 100 includes an inverter unit 6 to control the rotating electrical machine 1. The inverter unit 6 illustrated in FIG. 1 is housed in the case 9.

Here, in the present application, the phrase "drivingly couple" refers to a state in which two rotating elements are coupled so as to be able to transmit driving force, and includes a state in which the two rotating elements are coupled so as to rotate integrally, or a state in which the two rotating elements are coupled so as to be able to transmit driving force via one or two or more transmission members. Examples of the transmission members include various members that transmit rotation at the same speed or at a different speed, such as a shaft, a gear mechanism, a belt, and a chain. Examples of the transmission members may include an engaging device that selectively transmits rotation and driving force, such as a friction engaging device and a meshing-type engaging device.

The phrase "coupled so as to rotate integrally" means that a state in which two rotating elements are coupled so as to rotate integrally (hereinafter, referred to as an "integrally rotating state") can be achieved. That is, the phrase "coupled so as to rotate integrally" includes both a mode in which the integrally rotating state is always achieved (a mode in which the two rotating elements are coupled so as to rotate integrally) and a mode in which the integrally rotating state is selectively achieved (a mode in which the two rotating elements can be coupled so as to rotate integrally).

The rotating electrical machine 1 functions as a driving force source for the wheels WH. The rotating electrical machine 1 has a function as a motor (electric motor) that receives electric power supply to generate power, and a function as a generator (electric generator) that receives power supply to generate electric power. Specifically, the rotating electrical machine 1 is electrically connected to an electrical storage device (not illustrated) such as a battery or a capacitor. The rotating electrical machine 1 is powered by electric power stored in the electrical storage device to generate driving force. The rotating electrical machine 1 generates electric power with driving force transmitted from the wheel WH side to charge the electrical storage device.

The rotating electrical machine 1 further includes a stator 11. The stator 11 includes a cylindrical stator core 111. The stator core 111 is fixed to a non-rotating member. In the present embodiment, the stator core 111 is fixed to the case 9 as the non-rotating member. The rotor 12 of the rotating electrical machine 1 includes a cylindrical rotor core 121. The rotor core 121 is supported rotatably relative to the stator core 111.

The reduction mechanism 4 decelerates the rotation of the rotor 12. The reduction mechanism 4 includes a first gear 4A coupled to the rotor 12 so as to rotate integrally therewith, a first counter gear mechanism 41, a second counter gear mechanism 42, and a differential input gear 4F. In the present embodiment, the first gear 4A is coupled to the rotor 12 so as to rotate integrally therewith, and the rotor 12 and the first gear 4A are always coupled so as to rotate integrally. The first gear 4A is disposed on a first axis X1. The first counter gear mechanism 41 is coupled to the first gear 4A. The first counter gear mechanism 41 is disposed on a second axis X2 that is an axis different from the first axis X1. The second counter gear mechanism 42 is coupled to the first counter gear mechanism 41. The second counter gear mechanism 42 is disposed on a third axis X3 that is an axis different from the first axis X1 and the second axis X2. In this example, the first axis X1, the second axis X2, and the third axis X3 are parallel to each other. The differential input gear 4F is coupled to the second counter gear mechanism 42. The differential input gear 4F is disposed on the first axis X1. The differential input gear 4F is drivingly coupled to the differential gear mechanism 5. The differential input gear 4F corresponds to a "sixth gear".

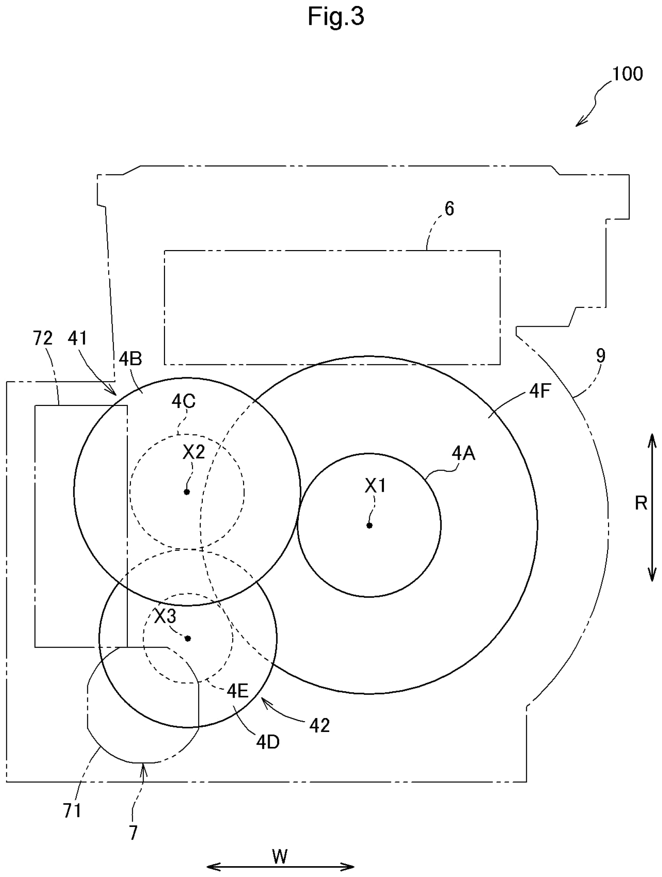

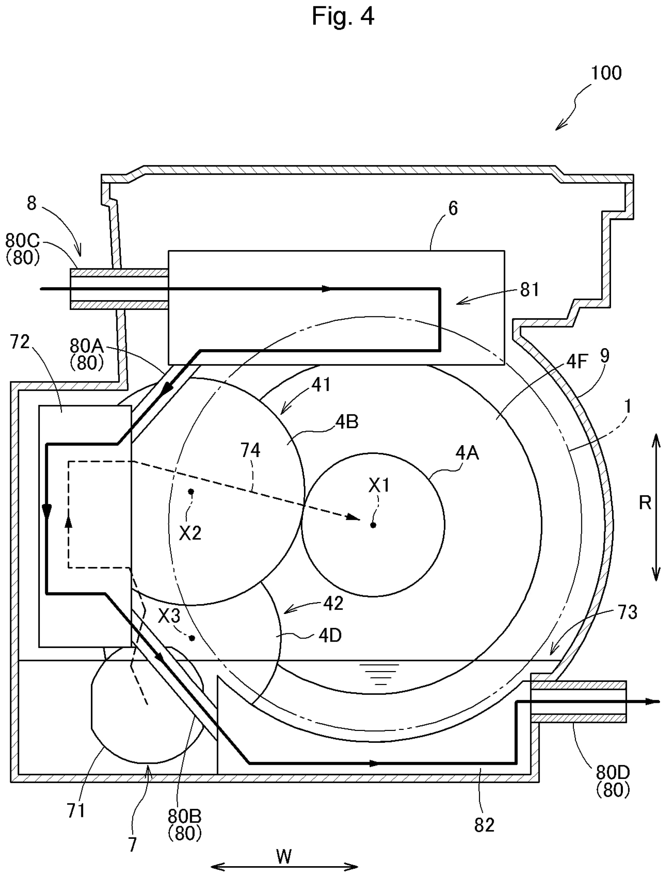

In the following description, a direction along the first axis X1 is referred to as an "axial direction L" of the vehicular drive device 100. As illustrated in FIG. 3, a direction orthogonal to the first axis X1 as viewed in an up-and-down direction is referred to as a "width direction W" of the vehicular drive device 100. Here, the up-and-down direction is a direction along a vertical direction (an up-and-down direction in FIGS. 3 and 4) in a state where the vehicular drive device 100 is mounted on a vehicle. In this example, both the second axis X2 and the third axis X3 are disposed on one side of the first axis X1 in the width direction W. In this example, the second axis X2 is disposed above the third axis X3, and the first axis X1 is disposed between the second axis X2 and the third axis X3 in the up-and-down direction. A direction orthogonal to the rotation axis of a rotating member such as the rotor 12 is referred to as a "radial direction R" with respect to each rotation axis. When it is not necessary to distinguish a rotation axis used as a reference or when it is clear which rotation axis is used as a reference, the direction is sometimes simply referred to as the "radial direction R". One side in the axial direction L is referred to as a first axial side L1. The other side in the axial direction L is referred to as a second axial side L2.

In the present embodiment, the rotor 12, the pair of output members 3, and the differential gear mechanism 5 are disposed on the first axis X1. In the present embodiment, both the first counter gear mechanism 41 and the second counter gear mechanism 42 are disposed so as to overlap the rotating electrical machine 1 as viewed in the axial direction L. In addition, the first counter gear mechanism 41 and the second counter gear mechanism 42 are disposed so as to overlap each other as viewed in the axial direction L. For the arrangement of two elements, the phrase "overlap as viewed in a specific direction" means that when a virtual straight line parallel to the line of sight in that direction is moved in directions orthogonal to the virtual straight line, a region where the virtual straight line intersects both of the two elements exists at least partially.

In the present embodiment, as illustrated in FIGS. 1 and 2, the first gear 4A is coupled to the rotor 12 by a rotor shaft 2. The rotor shaft 2 includes a shaft member coupled to the rotor 12 so as to rotate integrally therewith. The rotor shaft 2 is fixed to the rotor 12. The first gear 4A is fixed to the rotor shaft 2. In this example, the first gear 4A is a member separate from the rotor shaft 2, and is a member coupled to the rotor shaft 2 so as to rotate integrally with the rotor shaft 2. Here, "separate members" are separate members separated in the state of parts before forming a final product, and include both those separable in the state of a final product and those inseparably joined in the state of a final product. Further, a case where a plurality of members constituting "separate members" are made of the same material and a case where the plurality of members are made of different materials are both included. For example, the coupling between the rotor shaft 2 and the first gear 4A includes spline coupling, fastening with fastening members such as bolts, joining by welding, etc. The first gear 4A may be formed integrally with the rotor shaft 2.

The first counter gear mechanism 41 includes a second gear 4B and a third gear 4C. The second gear 4B meshes with the first gear 4A. The third gear 4C is coupled to the second gear 4B so as to rotate integrally therewith. In the present embodiment, the third gear 4C is coupled to the second gear 4B so as to rotate integrally therewith, and the second gear 4B and the third gear 4C are always coupled so as to rotate integrally. In the present embodiment, the third gear 4C is coupled to the second gear 4B via a first counter shaft 411. The first counter shaft 411 includes a shaft member coupled to the second gear 4B and the third gear 4C so as to rotate integrally therewith. At least one of the second gear 4B or the third gear 4C is a member separate from the first counter shaft 411, and is coupled to the first counter shaft 411 so as to rotate integrally therewith. The rest of the second gear 4B or the third gear 4C is integrally formed with the first counter shaft 411. In this example, the second gear 4B is a member separate from the first counter shaft 411, and the third gear 4C is integrally formed with the first counter shaft 411.

In the example illustrated in FIG. 1, the second gear 4B is formed to have a larger diameter than the first gear 4A. Although not illustrated, the number of teeth of the second gear 4B is larger than the number of teeth of the first gear 4A. Consequently, when the rotation of the first gear 4A is transmitted to the second gear 4B, the rotation speed of the first counter shaft 411 is slower than the rotation speed of the first gear 4A. Further, in the example illustrated in FIG. 1, the third gear 4C is formed to have a smaller diameter than the second gear 4B. Consequently, a fourth gear 4D (described later) meshing with the third gear 4C can also be disposed at a position overlapping the second gear 4B as viewed in the axial direction L. This facilitates the formation of the fourth gear 4D with a larger diameter without increasing the dimension of the vehicular drive device 100 in the width direction W.

The second counter gear mechanism 42 includes the fourth gear 4D and a fifth gear 4E. The fourth gear 4D meshes with the third gear 4C. The fifth gear 4E is coupled to the fourth gear 4D so as to rotate integrally therewith. In the present embodiment, the fifth gear 4E is coupled to the fourth gear 4D so as to rotate integrally therewith, and the fourth gear 4D and the fifth gear 4E are always coupled so as to rotate integrally. In the present embodiment, the fourth gear 4D is coupled to the fifth gear 4E via a second counter shaft 421. The second counter shaft 421 includes a shaft member coupled to the fourth gear 4D and the fifth gear 4E so as to rotate integrally therewith. At least one of the fourth gear 4D or the fifth gear 4E is a member separate from the second counter shaft 421, and is coupled to the second counter shaft 421 so as to rotate integrally therewith. The rest of the fourth gear 4D or the fifth gear 4E is integrally formed with the second counter shaft 421. In this example, the fourth gear 4D is a member separate from the second counter shaft 421, and the fifth gear 4E is integrally formed with the second counter shaft 421. The fifth gear 4E meshes with the differential input gear 4F. In the example illustrated in FIG. 1, the differential input gear 4F is formed to have a larger diameter than the fifth gear 4E. Although not illustrated, the number of teeth of the differential input gear 4F is larger than the number of teeth of the fifth gear 4E. Consequently, when the rotation of the fifth gear 4E is transmitted to the differential input gear 4F, the rotation speed of the differential input gear 4F is slower than the rotation speed of the fifth gear 4E.

In the example illustrated in FIG. 1, the fourth gear 4D is formed to have a larger diameter than the third gear 4C. Although not illustrated, the number of teeth of the fourth gear 4D is larger than the number of teeth of the third gear 4C. Consequently, when the rotation of the third gear 4C is transmitted to the fourth gear 4D, the rotation speed of the second counter shaft 421 is slower than the rotation speed of the first counter shaft 411. Further, in the example illustrated in FIG. 1, the fifth gear 4E is formed to have a smaller diameter than the fourth gear 4D. Consequently, the differential input gear 4F meshing with the fifth gear 4E can also be disposed at a position overlapping the fourth gear 4D as viewed in the axial direction L. This facilitates the formation of the differential input gear 4F with a larger diameter without increasing the dimension of the vehicular drive device 100 in the width direction W.

In the present embodiment, the third gear 4C and the fourth gear 4D are disposed on the second axial side L2 of the first gear 4A and the second gear 4B. The fifth gear 4E and the differential input gear 4F are disposed on the second axial side L2 of the third gear 4C and the fourth gear 4D. Thus, the differential input gear 4F is disposed at a position farther from the rotating electrical machine 1 than the first gear 4A, the second gear 4B, the third gear 4C, and the fourth gear 4D. Consequently, as viewed in the axial direction L, the differential input gear 4F can be made to overlap the second gear 4B, the third gear 4C, and the fourth gear 4D. This allows the formation of the differential input gear 4F with a larger diameter without increasing the dimension (for example, the dimension in the width direction W) of the entire vehicular drive device 100 as viewed in the axial direction L. In other words, the reduction ratio of the reduction mechanism 4 can be easily increased without increasing the dimension (for example, the dimension in the width direction W) of the entire vehicular drive device 100 as viewed in the axial direction L.

In the present embodiment, a gear having a larger outer diameter (large-diameter gear) of the gears included in the first counter gear mechanism 41, and a gear having a larger outer diameter (large-diameter gear) of the gears included in the second counter gear mechanism 42 overlap the rotating electrical machine 1 as viewed in the axial direction L. In the example illustrated in FIG. 1, the second gear 4B and the fourth gear 4D overlap the rotating electrical machine 1 as viewed in the axial direction L. This facilitates the formation of the entire vehicular drive device 100 with a smaller dimension in the width direction W. Furthermore, in the present embodiment, the large-diameter gear of the first counter gear mechanism 41 overlaps the large-diameter gear of the second counter gear mechanism 42 as viewed in the axial direction L. In the example illustrated in FIG. 1, the second gear 4B and the fourth gear 4D overlap each other as viewed in the axial direction L. This facilitates the formation of the entire vehicular drive device 100 with a smaller dimension in the width direction W.

In the present embodiment, as illustrated in FIG. 3, the entire first counter gear mechanism 41 and the entire second counter gear mechanism 42 are disposed on one side of the first axis X1 in the width direction W. In the example illustrated in FIG. 3, the entire first counter gear mechanism 41 and the entire second counter gear mechanism 42 are disposed on the left side of the first axis X1 on the sheet. Consequently, the distance from the second axis X2 to the third axis X3 in the width direction W is smaller than when the entire first counter gear mechanism 41 is disposed at a position opposite the entire second counter gear mechanism 42 across the first axis X1. Therefore, the entire vehicular drive device 100 can be easily formed to have a smaller dimension in the width direction W.

As illustrated in FIG. 1, the differential gear mechanism 5 includes a differential input member 51. The differential gear mechanism 5 distributes rotation transmitted from the reduction mechanism 4 to the differential input member 51 to the pair of output members 3. In the present embodiment, the differential input gear 4F is coupled to the differential input member 51 so as to rotate integrally therewith.

In the present embodiment, the rotor 12, the first gear 4A, and the differential gear mechanism 5 are arranged on the first axis X1 in the described order from the first axial side L1 toward the second axial side L2. The region where the differential gear mechanism 5 is disposed in the axial direction L overlaps the region where the third gear 4C and the fourth gear 4D are disposed in the axial direction L. Consequently, the dimension of the entire vehicular drive device 100 in the axial direction L is smaller than when the region where the differential gear mechanism 5 is disposed in the axial direction L does not overlap the region where the third gear 4C and the fourth gear 4D are disposed in the axial direction L.

In the present embodiment, the differential gear mechanism 5 further includes a pair of pinion gears 52 and a pair of side gears 53. Here, the pair of pinion gears 52 and the pair of side gears 53 are all bevel gears.

The differential input member 51 of the present embodiment is a hollow member accommodating the pair of pinion gears 52 and the pair of side gears 53. The differential input member 51 is coupled to the differential input gear 4F so as to rotate integrally therewith.

The pair of pinion gears 52 are disposed so as to face each other with a space therebetween in the radial direction R with respect to the first axis X1. The pair of pinion gears 52 are mounted on a pinion shaft 52a supported so as to rotate integrally with the differential input member 51. Each of the pair of pinion gears 52 is rotatable about the pinion shaft 52a and revolvable about the first axis X1.

The pair of side gears 53 mesh with the pair of pinion gears 52. The pair of side gears 53 are disposed so as to rotate about the first axis X1 as the rotation axis. The pair of side gears 53 are disposed so as to face each other across the pinion shaft 52a with a space therebetween in the axial direction L.

The inverter unit 6 of the present embodiment includes an inverter circuit (not illustrated) connected to a battery (not illustrated) that stores electric power, a rotating electrical machine control unit (not illustrated), a driver (not illustrated), and a heat sink to cool the inverter circuit configured as modules.

The inverter circuit includes a plurality of switching elements. The inverter circuit includes a plurality of sets of arms for one AC phase formed by a series circuit of an upper switching element on the DC positive side and a lower switching element on the negative side. Each switching element is provided with a freewheeling diode in parallel, with a direction from the negative electrode to the positive electrode as a forward direction. As the switching elements, for example, power semiconductor devices such as insulated-gate bipolar transistors (IGBTs), power metal-oxide semiconductor field-effect transistors (MOSFETs), silicon carbide-metal-oxide semiconductor FETs (SiC-MOSFETs), SiC-static induction transistors (SiC-SITs), and gallium nitride-MOSFETs (GaN-MOSFETs) can be used.

For example, a smoothing capacitor (not illustrated) is provided between the inverter circuit and the battery. The smoothing capacitor smooths the DC-side voltage of the inverter circuit. The smoothing capacitor may or may not be included in the inverter unit 6. Further, a boost converter may be provided. In this case, the boost converter may be included in the inverter unit 6. The inverter unit 6 includes, for example, a plurality of connection terminals (not illustrated) corresponding one-to-one to stator coils (not illustrated) of the respective phases of the stator 11 in the rotating electrical machine 1. The inverter unit 6 is connected to the stator coils of the respective phases via the plurality of connection terminals.

The rotating electrical machine control unit performs switching control on the plurality of switching elements constituting the inverter circuit, to convert DC power supplied from the battery into AC power of a plurality of phases. The rotating electrical machine control unit performs current feedback control, based on the rotational position of the rotor 12 (the magnetic pole positions of permanent magnets 122), the rotation speed of the rotor 12, and the currents flowing through the stator coils of three phases. The rotational position of the rotor 12 is detected by a rotation sensor (not illustrated) such as a resolver or an inductive position sensor. The currents flowing through the stator coils are detected by current sensors (not illustrated). The driver amplifies the voltage of switching control signals output from the rotating electrical machine control unit to increase driving force, and supplies them to the inverter circuit.

In the present embodiment, at least part (for example, the smoothing capacitor described above) of the inverter unit 6 is disposed between the rotating electrical machine 1 and the differential input gear 4F in the axial direction L, so as to overlap both the rotating electrical machine 1 and the differential input gear 4F as viewed in the axial direction L along the axial direction L. In the example illustrated in FIG. 1, the inverter unit 6 is disposed between the stator 11 of the rotating electrical machine 1 and the differential input gear 4F in the axial direction L, so as to overlap both the stator 11 and the differential input gear 4F as viewed in the axial direction L along the axial direction L. More specifically, in the example illustrated in FIG. 1, the inverter unit 6 is disposed between a coil end 112 of the stator 11 and the differential input gear 4F in the axial direction L, so as to overlap both the coil end 112 and the differential input gear 4F as viewed in the axial direction L along the axial direction L.

As described above, the case 9 houses the rotating electrical machine 1, the reduction mechanism 4, and the differential gear mechanism 5. In the present embodiment, the case 9 also houses the pair of output members 3.

As illustrated in FIG. 1, in the present embodiment, the case 9 includes a first housing portion A1, a second housing portion A2, and a third housing portion A3 inside. The first housing portion A1 contains a space in which the rotating electrical machine 1 is housed. The second housing portion A2 contains a space in which the reduction mechanism 4 and the differential gear mechanism 5 are housed. The third housing portion A3 contains a space in which the inverter unit 6 is housed.

In the present embodiment, the case 9 includes a partition wall 91, a first peripheral wall 92a, a first side wall 92b, a second peripheral wall 93a, a second side wall 93b, an intermediate wall 94, a third side wall 95a, and a wall 95b.

The partition wall 91 is formed to divide the first housing portion A1 and the second housing portion A2. In the present embodiment, the partition wall 91 is formed to extend in the radial direction R. That is, the partition wall 91 divides the first housing portion A1 and the second housing portion A2 in the axial direction L.

The first peripheral wall 92a is formed to cover the outer side of the rotating electrical machine 1 in the radial direction R. In the example illustrated in FIG. 1, the stator 11 of the rotating electrical machine 1 is fixed to the first peripheral wall 92a. In the present embodiment, the rotating electrical machine 1 is of an inner rotor type. That is, the stator 11 is disposed outside the rotor 12 in the radial direction R. Consequently, the stator core 111 is disposed outside the rotor core 121 in the radial direction R.

In the present embodiment, the rotating electrical machine 1 is of a revolving field type. Thus, the stator coils are wound around the stator core 111. The stator coils are wound around the stator core 111 so as to form a pair of coil ends 112 protruding to the first axial side L1 and the second axial side L2 from the stator core 111. The rotor core 121 is provided with the permanent magnets 122.

The first side wall 92b is formed to cover the rotating electrical machine 1 on the first axial side L1. In the present embodiment, the first peripheral wall 92a is formed in a cylindrical shape open on the first axial side L1. The opening of the first peripheral wall 92a on the first axial side L1 is closed by the first side wall 92b. On the other hand, the partition wall 91 is provided integrally with a portion of the first peripheral wall 92a on the second axial side L2 of the rotating electrical machine 1.

The second peripheral wall 93a is formed to cover the outer sides of the reduction mechanism 4 and the differential gear mechanism 5 in the radial direction R. The second side wall 93b is formed to cover the reduction mechanism 4 and the differential gear mechanism 5 on the second axial side L2. In the present embodiment, the second peripheral wall 93a is formed in a cylindrical shape open on the second axial side L2. The opening of the second peripheral wall 93a on the second axial side L2 is closed by the second side wall 93b. On the other hand, the partition wall 91 is provided integrally with a portion of the second peripheral wall 93a on the first axial side L1 of the first gear 4A.

In the present embodiment, the first housing portion A1 is formed by the partition wall 91, the first peripheral wall 92a, and the first side wall 92b. That is, the space enclosed by the partition wall 91, the first peripheral wall 92a, and the first side wall 92b inside the case 9 is formed as the first housing portion A1.

In the present embodiment, the second housing portion A2 is formed by the partition wall 91, the second peripheral wall 93a, and the second side wall 93b. That is, the space enclosed by the partition wall 91, the second peripheral wall 93a, and the second side wall 93b inside the case 9 is formed as the second housing portion A2.

In the present embodiment, the intermediate wall 94 is a portion that supports at least one of the rotor 12, the reduction mechanism 4, and the differential gear mechanism 5 inside the case 9. The intermediate wall 94 extends inside the second housing portion A2 from outside to inside in the radial direction R. In the example illustrated in FIG. 1, the intermediate wall 94 is fixed to the second peripheral wall 93a. The intermediate wall 94 overlaps the region where at least one of the rotor 12, the first counter gear mechanism 41, the second counter gear mechanism 42, and the differential gear mechanism 5 is disposed as viewed in the axial direction L. In addition, in the example illustrated in FIG. 1, part of the intermediate wall 94 is disposed between the region where the first counter gear mechanism 41 is disposed and the region where the second counter gear mechanism 42 is disposed inside the second housing portion A2. Specifically, the intermediate wall 94 includes a portion disposed on the second axial side L2 of the third gear 4C and a portion disposed on the first axial side L1 of the fourth gear 4D. The third gear 4C and the fourth gear 4D pass through the intermediate wall 94 to mesh with each other. Specifically, as illustrated in FIG. 1, the intermediate wall 94 includes a communicating portion through which the region where the third gear 4C is disposed communicates with the region where the fourth gear 4D is disposed. The third gear 4C and the fourth gear 4D mesh with each other through the communicating portion. If the case 9 can support the rotor 12, the reduction mechanism 4, and the differential gear mechanism 5, the intermediate wall 94 may not be provided.

The third side wall 95a is formed to cover the outer side of the inverter unit 6 in the axial direction L and the width direction W. In the example illustrated in FIG. 1, the third side wall 95a is formed to extend outward in the radial direction R from the outer peripheral surfaces of the first peripheral wall 92a and the second peripheral wall 93a. The wall 95b covers the inverter unit 6 from the outside in the radial direction R (here, the upper side). In the present embodiment, the third housing portion A3 is formed by the first peripheral wall 92a, the second peripheral wall 93a, the third side wall 95a, and the wall 95b. That is, the space enclosed by the first peripheral wall 92a, the second peripheral wall 93a, the third side wall 95a, and the wall 95b inside the case 9 is formed as the third housing portion A3. In the example illustrated in FIG. 1, the inverter unit 6 is housed in the third housing portion A3 so as to face both the first peripheral wall 92a and the second peripheral wall 93a.

In the present embodiment, the rotor shaft 2 to which the rotor 12 is fixed is housed in the first housing portion A1 and the second housing portion A2 and is rotatably supported by the case 9. The reduction mechanism 4 and the differential gear mechanism 5 are housed in the second housing portion A2 and are rotatably supported by the case 9. The following describes a support structure for the rotor shaft 2, the reduction mechanism 4, and the differential gear mechanism 5.

In the present embodiment, the rotor shaft 2 includes a first shaft end portion 21, a rotor fixing portion 22, a bearing fitting portion 23, a first gear coupling portion 24, and a second shaft end portion 25. The first shaft end portion 21, the rotor fixing portion 22, the bearing fitting portion 23, the first gear coupling portion 24, and the second shaft end portion 25 are arranged in the described order along the axial direction L from the first axial side L1 toward the second axial side L2.

The first shaft end portion 21 is a portion supported by a first bearing B1 described later. In the example illustrated in FIG. 1, the first shaft end portion 21 is formed in a cylindrical shape having an axis along the axial direction L. The rotor 12 is fixed to the rotor fixing portion 22. In the present embodiment, the rotor fixing portion 22 is formed in a cylindrical shape having an axis along the axial direction L. In the example illustrated in FIG. 1, the rotor fixing portion 22 is disposed so as to project from the rotor 12 to each of the first axial side L1 and the second axial side L2. The outer diameter of the rotor fixing portion 22 is formed to be smaller than that of the first shaft end portion 21. A third bearing B3 described later is fitted to the bearing fitting portion 23. The first gear coupling portion 24 is a portion to which the first gear 4A is coupled. In this example, the first gear 4A is spline-engaged with the first gear coupling portion 24. The second shaft end portion 25 is a portion supported by a second bearing B2 described later. In the example illustrated in FIG. 1, the second shaft end portion 25 is formed in a cylindrical shape having an axis along the axial direction L.

As illustrated in FIG. 1, the rotor 12 and the rotor shaft 2 are coupled to each other with the inner peripheral surface of the rotor 12 in contact with the outer peripheral surface of the rotor shaft 2. In the present embodiment, the inner peripheral surface of the rotor 12 is the inner peripheral surface of the rotor core 121. In the present embodiment, the outer peripheral surface of the rotor shaft 2 is the outer peripheral surface of the rotor fixing portion 22. The rotor 12 and the first gear 4A are disposed at different positions in the axial direction L. The first gear 4A is disposed on the second axial side L2 of the rotor 12.

As illustrated in FIGS. 1 and 2, the rotor shaft 2 is supported rotatably relative to the case 9 at three points in the axial direction L by the first bearing B1, the second bearing B2, and the third bearing B3.

The first bearing B1 is disposed on the first axial side L1 of the rotor 12. The first bearing B1 rotatably supports the rotor shaft 2. In the present embodiment, the first bearing B1 is disposed so as to support the inner peripheral surface of the first shaft end portion 21 of the rotor shaft 2 from the inside in the radial direction R. In the example illustrated in FIG. 1, the first side wall 92b of the case 9 includes a first bearing support portion 92c. The first bearing support portion 92c is formed in a cylindrical shape projecting to the second axial side L2 so as to overlap the first shaft end portion 21 as viewed in the radial direction R along the radial direction R inside the first shaft end portion 21 in the radial direction R. The first bearing B1 is disposed between the outer peripheral surface of the first bearing support portion 92c and the inner peripheral surface of the first shaft end portion 21.

The second bearing B2 is disposed on the second axial side L2 of the first gear 4A. The second bearing B2 rotatably supports the second shaft end portion 25 of the rotor shaft 2. In the present embodiment, the second bearing B2 is disposed so as to support the outer peripheral surface of the second shaft end portion 25 from the outside in the radial direction R. In the example illustrated in FIG. 1, the case 9 includes a second bearing support portion 94a. The second bearing support portion 94a is formed on the intermediate wall 94. The second bearing support portion 94a is formed in a cylindrical shape projecting to the first axial side L1 so as to overlap the second shaft end portion 25 as viewed in the radial direction R along the radial direction R outside the second shaft end portion 25 in the radial direction R. The second bearing B2 is disposed between the inner peripheral surface of the second bearing support portion 94a and the outer peripheral surface of the second shaft end portion 25.

The third bearing B3 is disposed between the rotor 12 and the first gear 4A in the axial direction L. The third bearing B3 rotatably supports the rotor shaft 2. In the present embodiment, the third bearing B3 is disposed so as to support the bearing fitting portion 23 from the outside in the radial direction R. In this example, the third bearing B3 is disposed so as to support the outer peripheral surface of the bearing fitting portion 23 from the outside in the radial direction R. In the example illustrated in FIG. 1, the case 9 includes a third bearing support portion 91a that supports the third bearing B3 from the outside in the radial direction R. The third bearing B3 is supported by the third bearing support portion 91a. The third bearing support portion 91a is formed in a cylindrical shape extending along the axial direction L so as to overlap the bearing fitting portion 23 as viewed in the radial direction R along the radial direction R outside the bearing fitting portion 23 of the rotor shaft 2 in the radial direction R.

The first counter shaft 411 is formed to extend along the second axis X2. In the present embodiment, the first counter shaft 411 is supported rotatably relative to the case 9 by a first counter bearing B11 and a second counter bearing B12.

In the present embodiment, the first counter bearing B11 is disposed on the first axial side L1 of the second gear 4B. In the example illustrated in FIG. 1, the first counter bearing B11 is disposed inside the second gear 4B in the radial direction R with respect to the second axis X2.

In the present embodiment, the first counter bearing B11 is disposed so as to support the outer peripheral surface of the first counter shaft 411 from the outside in the radial direction R. In the example illustrated in FIG. 1, the partition wall 91 of the case 9 includes a first counter bearing support portion 91b. The first counter bearing support portion 91b is formed in a cylindrical shape projecting to the second axial side L2 inside the second gear 4B in the radial direction R. The first counter bearing B11 is disposed between the inner peripheral surface of the first counter bearing support portion 91b and the outer peripheral surface of the first counter shaft 411.

In the present embodiment, the second counter bearing B12 is disposed on the second axial side L2 of the third gear 4C. In the present embodiment, the second counter bearing B12 is disposed so as to support the outer peripheral surface of the first counter shaft 411 from the outside in the radial direction R. In the example illustrated in FIG. 1, the case 9 includes a second counter bearing support portion 94c. The second counter bearing support portion 94c is formed on the intermediate wall 94. The second counter bearing support portion 94c is formed in a cylindrical shape having an axis along the axial direction L, and is disposed on the second axial side L2 of the third gear 4C away from the third gear 4C. Consequently, the second counter bearing support portion 94c is formed in a cylindrical shape overlapping the first counter shaft 411 as viewed in the radial direction R along the radial direction R outside the first counter shaft 411 in the radial direction R. The second counter bearing B12 is disposed between the inner peripheral surface of the second counter bearing support portion 94c and the outer peripheral surface of the first counter shaft 411. Thus, in the present embodiment, the second counter bearing B12 is disposed on the second axial side L2 of the second bearing B2.

The second counter shaft 421 is formed to extend along the third axis X3. In the present embodiment, the second counter shaft 421 is supported rotatably relative to the case 9 by a third counter bearing B13 and a fourth counter bearing B14.

In the present embodiment, the third counter bearing B13 is disposed on the first axial side L1 of the fourth gear 4D. In the example illustrated in FIG. 1, the third counter bearing B13 is disposed inside the fourth gear 4D in the radial direction R with respect to the third axis X3.

In the present embodiment, the third counter bearing B13 is disposed so as to support the outer peripheral surface of the second counter shaft 421 from the outside in the radial direction R. In the example illustrated in FIG. 1, the case 9 includes a third counter bearing support portion 94d. The third counter bearing support portion 94d is formed on the intermediate wall 94. The third counter bearing support portion 94d is formed in a cylindrical shape projecting to the second axial side L2 inside the fourth gear 4D in the radial direction R. The third counter bearing B13 is disposed between the inner peripheral surface of the third counter bearing support portion 94d and the outer peripheral surface of the second counter shaft 421.

In the present embodiment, the fourth counter bearing B14 is disposed on the second axial side L2 of the fifth gear 4E. In the present embodiment, the fourth counter bearing B14 is disposed so as to support the outer peripheral surface of the second counter shaft 421 from the outside in the radial direction R. In the example illustrated in FIG. 1, the case 9 includes a fourth counter bearing support portion 93d. The fourth counter bearing support portion 93d is formed on the second side wall 93b. The fourth counter bearing support portion 93d is formed in a cylindrical shape having an axis along the axial direction L, and is disposed on the second axial side L2 of the fifth gear 4E away from the fifth gear 4E. Consequently, the fourth counter bearing support portion 93d is formed in a cylindrical shape overlapping the second counter shaft 421 as viewed in the radial direction R along the radial direction R outside the second counter shaft 421 in the radial direction R. The fourth counter bearing B14 is disposed between the inner peripheral surface of the fourth counter bearing support portion 93d and the outer peripheral surface of the second counter shaft 421.

In the present embodiment, the differential gear mechanism 5 is supported rotatably relative to the case 9 by a first differential bearing B21 and a second differential bearing B22. In the example illustrated in FIG. 1, the differential input member 51 is supported rotatably relative to the case 9 by the first differential bearing B21 and the second differential bearing B22.

In the present embodiment, the first differential bearing B21 is disposed so as to support an end portion of the differential input member 51 on the first axial side L1 from the outside in the radial direction R. In the example illustrated in FIG. 1, the case 9 includes a first differential bearing support portion 94b. The first differential bearing support portion 94b is formed on the intermediate wall 94. The first differential bearing support portion 94b is formed in a cylindrical shape having an axis along the axial direction L, and is disposed so as to overlap the end portion of the differential input member 51 on the first axial side L1 as viewed in the radial direction R along the radial direction R outside the end portion of the differential input member 51 on the first axial side L1 R in the radial direction R. The first differential bearing B21 is disposed between the inner peripheral surface of the first differential bearing support portion 94b and the outer peripheral surface of the end portion of the differential input member 51 on the first axial side L1.

In the present embodiment, the second differential bearing B22 is disposed so as to support an end portion of the differential input member 51 on the second axial side L2 from the outside in the radial direction R. In the example illustrated in FIG. 1, the second side wall 93b of the case 9 includes a second differential bearing support portion 93c. The second differential bearing support portion 93c is formed in a cylindrical shape having an axis along the axial direction L, and is disposed so as to overlap the end portion of the differential input member 51 on the second axial side L2 as viewed in the radial direction R along the radial direction R outside the end portion of the differential input member 51 on the second axial side L2 in the radial direction R. The second differential bearing B22 is disposed between the inner peripheral surface of the second differential bearing support portion 93c and the outer peripheral surface of the end portion of the differential input member 51 on the second axial side L2.

In the present embodiment, each of the pair of output members 3 is coupled to the side gear 53 so as to rotate integrally therewith. Each of the pair of output members 3 is coupled to a drive shaft DS drivingly coupled to the wheel WH, so as to rotate integrally therewith. In the example illustrated in FIG. 1, each of the pair of output members 3 is formed in a cylindrical shape with the first axis X1 as its axis. With the drive shaft DS disposed inside each of the pair of output members 3 in the radial direction R, they are coupled to each other by spline engagement.

The vehicular drive device 100 of the present embodiment includes a supply mechanism 7 to supply cooled oil to various places in the case 9. The following describes the supply mechanism 7 with reference to FIG. 4.

The supply mechanism 7 includes an oil pump 71 to circulate oil in the case 9, and an oil cooler 72 to cool the oil circulated by the oil pump 71. The oil pump 71 of the present embodiment sucks the oil in the case 9 and discharges the oil toward the various places in the case 9. The oil pump 71 includes, for example, a gear pump, a vane pump, etc. In the present embodiment, a suction port (not illustrated) through which the oil pump 71 sucks the oil is immersed in the oil stored in a reservoir 73. On the other hand, a discharge port of the oil pump 71 is connected to an oil passage 74 formed in the case 9. The oil passage 74 communicates with the places where the oil is required. The oil discharged from the oil pump 71 reaches mechanical elements through the oil passage 74. The oil discharged from the oil pump 71 is used, for example, to cool the rotating electrical machine 1 and to lubricate the mechanical elements in the case 9. Here, the mechanical elements include gears and bearings. The oil cooler 72 of the present embodiment exchanges heat between the oil discharged from the oil pump 71 and a refrigerant to be described later. In the example illustrated in FIG. 4, the oil cooler 72 includes a water-cooled heat exchanger that exchanges heat between cooling water for cooling and the oil. In the present embodiment, the oil cooler 72 is housed in the case 9.

In the present embodiment, at least one of the first counter gear mechanism 41 and the second counter gear mechanism 42 is disposed so as to overlap at least one of the oil pump 71 and the oil cooler 72 as viewed in the axial direction L along the axial direction L. In the example illustrated in FIG. 4, the oil pump 71 overlaps the second counter gear mechanism 42 as viewed in the axial direction L. The oil cooler 72 overlaps both the first counter gear mechanism 41 and the second counter gear mechanism 42 as viewed in the axial direction L.

The following describes a cooling mechanism 8 for cooling the rotating electrical machine 1 and the inverter unit 6. The cooling mechanism 8 circulates the refrigerant through the interior of the case 9, the rotating electrical machine 1, or the inverter unit 6. The refrigerant includes a liquid refrigerant such as cooling water, outside air outside the case 9, etc. Such a refrigerant exchanges heat with the rotating electrical machine 1 and the inverter unit 6. Consequently, the rotating electrical machine 1 and the inverter unit 6 are cooled. In the example illustrated in FIG. 4, a liquid refrigerant exchanges heat with the rotating electrical machine 1 and the inverter unit 6.

The cooling mechanism 8 of the present embodiment includes a first heat exchange unit 81, the reservoir 73, a second heat exchange unit 82, and a refrigerant flow path 80. The first heat exchange unit 81 exchanges heat between the inverter unit 6 and the refrigerant. The reservoir 73 is provided in a lower portion of the case 9. The oil is stored in the reservoir 73. The second heat exchange unit 82 exchanges heat between the oil stored in the reservoir 73 and the refrigerant. The refrigerant flow path 80 is provided in the case 9. The refrigerant flow path 80 is configured to allow the refrigerant to flow through the first heat exchange unit 81, the oil cooler 72, and the second heat exchange unit 82 in this order. In the present embodiment, the oil cooler 72 exchanges heat between the oil and the refrigerant.

The refrigerant flow path 80 includes a first refrigerant flow path 80A and a second refrigerant flow path 80B. The first refrigerant flow path 80A connects the first heat exchange unit 81 and the oil cooler 72. The second refrigerant flow path 80B connects the oil cooler 72 and the second heat exchange unit 82. In the example illustrated in FIG. 4, the first refrigerant flow path 80A and the second refrigerant flow path 80B are formed inside a wall of the case 9. The first refrigerant flow path 80A and the second refrigerant flow path 80B, which are formed inside the wall of the case 9, thus eliminate the need for intermediate hoses that are required when the paths are externally formed, facilitating the formation of the entire vehicular drive device 100 with a smaller size.

In the present embodiment, the refrigerant flow path 80 further includes a supply flow path 80C to supply the refrigerant to the inverter unit 6, and a discharge flow path 80D to discharge the refrigerant supplied to the second heat exchange unit 82. The supply flow path 80C communicates with the interior of the third housing portion A3 from the outside. The discharge flow path 80D connects the interior of the second heat exchange unit 82 to the outside. In the example illustrated in FIG. 4, the discharge flow path 80D is a pipe to allow the refrigerant inside the case 9 to flow to the outside of the case 9. In the example illustrated in FIG. 4, the supply flow path 80C and the discharge flow path 80D connect the interior of the case 9 to the outside to allow the refrigerant to also circulate outside the case 9. However, the refrigerant flow path 80 may be configured to allow the refrigerant to flow only inside the case 9. In this case, the refrigerant flow path 80 is formed only inside the case 9.

In the present embodiment, the first heat exchange unit 81 includes a flow path (for example, a water passage) formed in the inverter unit 6 housed in the third housing portion A3. The first heat exchange unit 81 is formed in the inverter unit 6 such that the refrigerant (for example, cooling water) flows along a heat sink thermally connected to the plurality of switching elements constituting the inverter circuit (not illustrated), for example. Consequently, the switching elements that generate a relatively large amount of heat during the travel of the vehicle can be cooled well.

In the present embodiment, the second heat exchange unit 82 is disposed in parallel with the reservoir 73 in the case 9. The refrigerant flowing through the second heat exchange unit 82 cools the oil stored in the reservoir 73 by heat exchange in the case 9. In the example illustrated in FIG. 4, the second heat exchange unit 82 is disposed in the first housing portion A1. The second heat exchange unit 82 is disposed in a lower portion of the first housing portion A1 adjacent to the reservoir 73 with a wall therebetween so that the oil stored in the reservoir 73 and the refrigerant flowing through the second heat exchange unit 82 are not mixed together.

In the present embodiment, the first refrigerant flow path 80A is disposed at a position overlapping at least one of the first counter gear mechanism 41 and the second counter gear mechanism 42 as viewed in the axial direction L. The second refrigerant flow path 80B is disposed at a position overlapping at least the other of the first counter gear mechanism 41 and the second counter gear mechanism 42 as viewed in the axial direction L. In the present embodiment, the first refrigerant flow path 80A overlaps the first counter gear mechanism 41 as viewed in the axial direction L. The second refrigerant flow path 80B overlaps the second counter gear mechanism 42 as viewed in the axial direction L.

### [Other Embodiments]

(1) In the above embodiment, the differential gear mechanism 5 of a bevel gear type has been described as an example. However, the differential gear mechanism 5 may be of a planetary gear type. The differential gear mechanism 5 may be of a planetary gear type including a double pinion. In this case, the differential input member 51 is a member that rotates integrally with a ring gear.
(2) In the above embodiment, it has been described that the entire first counter gear mechanism 41 is disposed on the one side of the first axis X1 in the width direction W. However, part of the first counter gear mechanism 41 may be disposed on the other side of the first axis X1 in the width direction W. Similarly, in the above embodiment, it has been described that the entire second counter gear mechanism 42 is disposed on the one side of the first axis X1 in the width direction W. However, part of the second counter gear mechanism 42 may be disposed on the other side of the first axis X1 in the width direction W.
(3) In the above embodiment, it has been described that the first axis X1, the second axis X2, and the third axis X3 are parallel to each other. However, a positional relationship in which one of the axes three-dimensionally intersects another axis may be used. For example, a positional relationship in which the first axis X1 three-dimensionally intersects the second axis X2 may be used.
(4) In the above embodiment, it has been described that the inverter unit 6 is disposed so as to overlap both the rotating electrical machine 1 and the differential input gear 4F as viewed in the axial direction L along the axial direction L. However, the inverter unit 6 may overlap only the rotating electrical machine 1 as viewed in the axial direction L along the axial direction L. Conversely, the inverter unit 6 may overlap only the differential input gear 4F as viewed axially along the axial direction L.
(5) In the above embodiment, it has been described that the oil discharged from the oil pump 71 cools the rotating electrical machine 1 and the mechanical elements in the case 9. However, the oil discharged from the oil pump 71 may be used only to cool the rotating electrical machine 1. In this case, the supply of lubricating oil to lubricate gear mechanisms and bearings includes immersing part of the gear mechanisms etc. in the lubricating oil and scooping up the lubricating oil by the rotation of the gear mechanisms etc. Conversely, the oil discharged from the oil pump 71 may be used only to lubricate various mechanical elements. In this case, the cooling structure of the rotating electrical machine 1 is of a water-cooling type or an air-cooling type.
(6) In the above embodiment, it has been described that the oil passage 74 is formed in the case 9. However, the oil passage 74 may be formed by a pipe or the like that is a member separate from the case 9. In this case, since it is not necessary to form the oil passage 74 in the case 9, the structure of the case 9 is simplified. The oil passage 74 may be formed by a combination of the case 9 and the pipe.
(7) The drive system of the oil pump 71 may be of either a mechanical type or an electric type. The oil pump 71 of the mechanical type may be actuated, for example, by being drivingly coupled to a drive source by a transmission element such as a gear mechanism. Examples of this drive source include the rotating electrical machine 1 and an internal combustion engine. If the oil pump 71 is of the electric type, for example, a motor for driving the oil pump 71 may be provided separately from the rotating electrical machine 1, and the oil pump 71 may be actuated by being drivingly coupled to the motor.
(8) In the above embodiment, it has been described that the oil pump 71 overlaps the second counter gear mechanism 42 as viewed in the axial direction L. However, the oil pump 71 may overlap the first counter gear mechanism 41 as viewed in the axial direction L. The oil pump 71 may overlap both the first counter gear mechanism 41 and the second counter gear mechanism 42 as viewed in the axial direction L. It has been described that the oil cooler 72 overlaps both the first counter gear mechanism 41 and the second counter gear mechanism 42 as viewed in the axial direction L. However, the oil cooler 72 may overlap any one of the first counter gear mechanism 41 and the second counter gear mechanism 42 as viewed in the axial direction L.
(9) In the above embodiment, it has been described that the oil cooler 72 includes a water-cooled type. Other than this, as the oil cooler 72, there is an air-cooled heat exchanger that exchanges heat between oil and air. Examples of the air include air outside the case 9. The oil cooler 72 includes a heat exchanger that exchanges heat between a refrigerant used in an air-conditioning apparatus and oil, etc.
(10) In the above embodiment, it has been described that the first refrigerant flow path 80A overlaps the first counter gear mechanism 41 as viewed in the axial direction L, and the second refrigerant flow path 80B overlaps the second counter gear mechanism 42 as viewed in the axial direction L. However, the first refrigerant flow path 80A may overlap the second counter gear mechanism 42. The first refrigerant flow path 80A may overlap both the first counter gear mechanism 41 and the second counter gear mechanism 42 as viewed in the axial direction L. Similarly, the second refrigerant flow path 80B may overlap the first counter gear mechanism 41. The second refrigerant flow path 80B may overlap both the first counter gear mechanism 41 and the second counter gear mechanism 42 as viewed in the axial direction L.
(11) In the above embodiment, it has been described that the first refrigerant flow path 80A is formed inside the wall of the case 9. However, the first refrigerant flow path 80A may be formed by a pipe that is a member separate from the case 9. In this case, the pipe may be provided either outside the case 9 or inside the case 9. Similarly, the second refrigerant flow path 80B may be formed by a pipe as described above.
(12) The configuration disclosed in each of the above-described embodiments can be applied in combination with the configuration disclosed in another embodiment as long as no contradictions arise. For the other configurations, the embodiments disclosed in the present description are merely examples in all respects. Therefore, various modifications can be made as appropriate without departing from the gist of the present disclosure.

### [Summary of the present embodiment]

Hereinafter, a summary of the embodiment of the vehicular drive device (100) described above will be described below.

A vehicular drive device (100) includes a rotating electrical machine (1) including a rotor (12), a pair of output members (3) drivingly coupled to respective wheels (WH), a reduction mechanism (4) configured to decelerate rotation of the rotor (12), and a differential gear mechanism (5) including a differential input member (51) to distribute rotation transmitted from the reduction mechanism (4) to the differential input member (51) to the pair of output members (3). In the vehicular drive device (100), the rotor (12), the pair of output members (3), and the differential gear mechanism (5) are disposed on a first axis (X1), and the reduction mechanism (4) includes a first gear (4A) disposed on the first axis (X1) and coupled to the rotor (12) so as to rotate integrally with the rotor (12), a first counter gear mechanism (41) including a second gear (4B) meshing with the first gear (4A) and a third gear (4C) coupled to the second gear (4B) so as to rotate integrally with the second gear (4B), the first counter gear mechanism (41) being disposed on a second axis (X2) that is an axis different from the first axis (X1), a second counter gear mechanism (42) including a fourth gear (4D) meshing with the third gear (4C) and a fifth gear (4E) coupled to the fourth gear (4D) so as to rotate integrally with the fourth gear (4D), the second counter gear mechanism (42) being disposed on a third axis (X3) that is an axis different from the first axis (X1) and the second axis (X2), and a sixth gear (4F) disposed on the first axis (X1), the sixth gear (4F) meshing with the fifth gear (4E) and being coupled to the differential input member (51) so as to rotate integrally with the differential input member (51).

According to this configuration, before the rotation of the rotor (12) is transmitted to the differential gear mechanism (5), the rotation can be decelerated at three points, a meshing portion of the first gear (4A) and the second gear (4B), a meshing portion of the third gear (4C) and the fourth gear (4D), and a meshing portion of the fifth gear (4E) and the sixth gear (4F). Consequently, as compared with a configuration including only one counter gear mechanism between the rotor (12) and the differential gear mechanism (5), the diameters of a plurality of gears can be easily reduced while a sufficient reduction ratio is maintained. Therefore, the size of the entire vehicular drive device (100) can be easily reduced. According to this configuration, the reduction mechanism (4) can include a relatively simple combination of gears. Consequently, as compared with a configuration using a planetary gear mechanism as the reduction mechanism (4), the transmission efficiency can be easily increased and the manufacturing costs can be easily reduced.

Here, preferably, the first axis (X1), the second axis (X2), and the third axis (X3) are parallel to each other, a direction along the first axis (X1) is an axial direction (L), and a direction orthogonal to the first axis (X1) as viewed in an up-and-down direction is a width direction (W), both the second axis (X2) and the third axis (X3) are disposed on one side of the first axis (X1) in the width direction (W), both the first counter gear mechanism (41) and the second counter gear mechanism (42) are disposed so as to overlap the rotating electrical machine (1) as viewed in the axial direction (L), and the first counter gear mechanism (41) and the second counter gear mechanism (42) are disposed so as to overlap each other as viewed in the axial direction (L).

According to this configuration, the size of the vehicular drive device (100) as viewed in the axial direction (L) can be easily reduced.

Preferably, a direction along the first axis (X1) is an axial direction (L), one side in the axial direction (L) is a first axial side (L1), and the other side in the axial direction (L) is a second axial side (L2), the rotor (12), the first gear (4A), and the differential gear mechanism (5) are arranged on the first axis (X1) from the first axial side (L1) toward the second axial side (L2) in the described order, the third gear (4C) and the fourth gear (4D) are disposed on the second axial side (L2) of the first gear (4A) and the second gear (4B), the fifth gear (4E) and the sixth gear (4F) are disposed on the second axial side (L2) of the third gear (4C) and the fourth gear (4D), and the region where the differential gear mechanism (5) is disposed in the axial direction (L) overlaps the region where the third gear (4C) and the fourth gear (4D) are disposed in the axial direction (L).

According to this configuration, the rotor (12) is disposed on the first axial side (L1) of the first gear (4A), the differential gear mechanism (5) is disposed on the second axial side (L2) of the first gear (4A), the third gear (4C) and the fourth gear (4D) are disposed on the second axial side (L2) of the first gear (4A) and the second gear (4B), the fifth gear (4E) and the sixth gear (4F) are disposed on the second axial side (L2) of the third gear (4C) and the fourth gear (4D), and the sixth gear (4F) is coupled to the differential input member (51) so as to rotate integrally therewith. Consequently, the transmission of driving force from the rotor (12) to the differential input member (51) can be performed from the first axial side (L1) toward the second axial side (L2). Therefore, the gear arrangement of the reduction mechanism (4) can be easily simplified. According to this configuration, the region where the differential gear mechanism (5) is disposed in the axial direction (L) overlaps the region where the third gear (4C) and the fourth gear (4D) are disposed in the axial direction (L). Consequently, as compared with a case where these do not overlap, the dimension of the vehicular drive device (100) in the axial direction (L) can be easily reduced.

Preferably, an inverter unit (6) configured to drive and control the rotating electrical machine (1) is further included, a direction along the first axis (X1) is an axial direction (L), and at least part of the inverter unit (6) is disposed between the rotating electrical machine (1) and the sixth gear (4F) in the axial direction (L) so as to overlap both the rotating electrical machine (1) and the sixth gear (4F) as viewed in the axial direction (L) along the axial direction (L).

According to this configuration, in the case where the vehicular drive device (100) includes the inverter unit (6), both the rotating electrical machine (1) and the sixth gear (4F) are disposed so as to overlap the inverter unit (6) as viewed in the axial direction (L). Consequently, as compared with a case where these are disposed so as not to overlap, the size of the vehicular drive device (100) as viewed in the axial direction (L) can be easily reduced. Further, a space formed between the rotating electrical machine (1) and the sixth gear (4F) in the axial direction (L) can be used to dispose at least part of the inverter unit (6). Consequently, the size of the vehicular drive device (100) can be easily reduced.

Preferably, a case (9) housing the rotating electrical machine (1), the reduction mechanism (4), and the differential gear mechanism (5), an oil pump (71) configured to suck and circulate oil in the case (9), and an oil cooler (72) configured to cool the oil circulated by the oil pump (71) are further included, a direction along the first axis (X1) is an axial direction (L), and at least one of the first counter gear mechanism (41) and the second counter gear mechanism (42) is disposed so as to overlap at least one of the oil pump (71) and the oil cooler (72) as viewed in the axial direction (L) along the axial direction (L).

According to this configuration, at least one of the first counter gear mechanism (41) and the second counter gear mechanism (42) is disposed so as to overlap at least one of the oil pump (71) and the oil cooler (72) as viewed in the axial direction (L). Consequently, as compared with a case where these are disposed so as not to overlap, the size of the vehicular drive device (100) as viewed in the axial direction (L) can be easily reduced.

Preferably, an inverter unit (6) configured to drive and control the rotating electrical machine (1), a first heat exchange unit (81) configured to exchange heat between the inverter unit (6) and a refrigerant, a reservoir (73) in which the oil is stored, the reservoir (73) being provided in a lower portion of the case (9), and a second heat exchange unit (82) configured to exchange heat between the oil stored in the reservoir (73) and the refrigerant are further included, the oil cooler (72) exchanges heat between the oil and the refrigerant, the case (9) is provided with a refrigerant flow path (80) configured to allow the refrigerant to flow through the first heat exchange unit (81), the oil cooler (72), and the second heat exchange unit (82) in this order, the refrigerant flow path (80) includes a first refrigerant flow path (80A) connecting the first heat exchange unit (81) and the oil cooler (72), and a second refrigerant flow path (80B) connecting the oil cooler (72) and the second heat exchange unit (82), the first refrigerant flow path (80A) is disposed at a position overlapping at least one of the first counter gear mechanism (41) and the second counter gear mechanism (42) as viewed in the axial direction (L), and the second refrigerant flow path (80B) is disposed at a position overlapping at least the other of the first counter gear mechanism (41) and the second counter gear mechanism (42) as viewed in the axial direction (L).

According to this configuration, a space overlapping the first counter gear mechanism (41) and the second counter gear mechanism (42) as viewed in the axial direction (L) can be used to dispose at least part of the refrigerant flow path (80). Therefore, the size of the entire vehicular drive device (100) can be easily reduced.

Preferably, a direction along the first axis (X1) is an axial direction (L), one side in the axial direction (L) is a first axial side (L1), and the other side in the axial direction (L) is a second axial side (L2), a case (9) housing the rotating electrical machine (1), the reduction mechanism (4), and the differential gear mechanism (5) is further included, the case (9) includes an intermediate wall (94) supporting at least one of the rotor (12), the reduction mechanism (4), and the differential gear mechanism (5) inside the case (9), the intermediate wall (94) includes a portion disposed on the second axial side (L2) of the third gear (4C), and a portion disposed on the first axial side (Ll) of the fourth gear (4D), and the third gear (4C) and the fourth gear (4D) pass through the intermediate wall (94) to mesh with each other.

According to this configuration, the structure of the rotor (12), the reduction mechanism (4), and the differential gear mechanism (5) supported by the intermediate wall (94) is supported at an intermediate position along the axial direction (L) inside the case (9), and thus can be easily reduced in size in the axial direction (L). In addition, it is not necessary to provide a meshing portion of the third gear (4C) and the fourth gear (4D) at a position bypassing the intermediate wall (94) to allow the intermediate wall (94) to support at least one of the rotor (12), the reduction mechanism (4), and the differential gear mechanism (5). Consequently, the entire vehicular drive device (100) can be easily reduced in size.

### INDUSTRIAL APPLICABILITY

The technology according to the present disclosure can be used in a vehicular drive device including a rotating electrical machine including a rotor and a reduction mechanism that decelerates the rotation of the rotor.

### REFERENCE SIGNS LIST

100: Vehicular drive device, 1: Rotating electrical machine, 12: Rotor, 3: Output member, 4: Reduction mechanism, 4A: First gear, 41: First counter gear mechanism, 4B: Second gear, 4C: Third gear, 42: Second counter gear mechanism, 4D: Fourth gear, 4E: Fifth gear, 4F: Differential input gear (sixth gear), 5: Differential gear mechanism, 51: Differential input member, 6: Inverter unit, 71: Oil pump, 72: Oil cooler, 73: Reservoir, 81: First heat exchange unit, 82: Second heat exchange unit, 80: Refrigerant flow path, 80A: First refrigerant flow path, 80B: Second refrigerant flow path, 9: Case, 94: Intermediate wall, L: Axial direction, L1: First axial side, L2: Second axial side, R: Radial direction, WH: Wheel, X1: First axis, X2: Second axis, and X3: Third axis

## Claims

1. A vehicular drive device comprising:
a rotating electrical machine including a rotor;
a pair of output members drivingly coupled to respective wheels;
a reduction mechanism configured to decelerate rotation of the rotor; and
a differential gear mechanism including a differential input member to distribute rotation transmitted from the reduction mechanism to the differential input member to the pair of output members, wherein
the rotor, the pair of output members, and the differential gear mechanism are disposed on a first axis, and
the reduction mechanism includes
a first gear disposed on the first axis and coupled to the rotor so as to rotate integrally with the rotor,
a first counter gear mechanism including a second gear meshing with the first gear and a third gear coupled to the second gear so as to rotate integrally with the second gear, the first counter gear mechanism being disposed on a second axis that is an axis different from the first axis,
a second counter gear mechanism including a fourth gear meshing with the third gear and a fifth gear coupled to the fourth gear so as to rotate integrally with the fourth gear, the second counter gear mechanism being disposed on a third axis that is an axis different from the first axis and the second axis, and
a sixth gear disposed on the first axis, the sixth gear meshing with the fifth gear and being coupled to the differential input member so as to rotate integrally with the differential input member.

2. The vehicular drive device according to claim 1, wherein
the first axis, the second axis, and the third axis are parallel to each other,
a direction along the first axis is an axial direction, and a direction orthogonal to the first axis as viewed in an up-and-down direction is a width direction,
both the second axis and the third axis are disposed on one side of the first axis in the width direction,
both the first counter gear mechanism and the second counter gear mechanism are disposed so as to overlap the rotating electrical machine as viewed in the axial direction, and
the first counter gear mechanism and the second counter gear mechanism are disposed so as to overlap each other as viewed in the axial direction.

3. The vehicular drive device according to claim 1 or 2, wherein
a direction along the first axis is an axial direction, one side in the axial direction is a first axial side, and the other side in the axial direction is a second axial side,
the rotor, the first gear, and the differential gear mechanism are arranged on the first axis from the first axial side toward the second axial side in a described order,
the third gear and the fourth gear are disposed on the second axial side of the first gear and the second gear,
the fifth gear and the sixth gear are disposed on the second axial side of the third gear and the fourth gear, and
a region where the differential gear mechanism is disposed in the axial direction overlaps a region where the third gear and the fourth gear are disposed in the axial direction.

4. The vehicular drive device according to claim 3, further comprising
an inverter unit configured to drive and control the rotating electrical machine, wherein
a direction along the first axis is an axial direction, and
at least part of the inverter unit is disposed between the rotating electrical machine and the sixth gear in the axial direction so as to overlap both the rotating electrical machine and the sixth gear as viewed axially along the axial direction.

5. The vehicular drive device according to claim 1 or 2, further comprising:
a case housing the rotating electrical machine, the reduction mechanism, and the differential gear mechanism;
an oil pump configured to suck and circulate oil in the case; and
an oil cooler configured to cool the oil circulated by the oil pump, wherein
a direction along the first axis is an axial direction, and
at least one of the first counter gear mechanism and the second counter gear mechanism is disposed so as to overlap at least one of the oil pump and the oil cooler as viewed axially along the axial direction.

6. The vehicular drive device according to claim 5, further comprising:
an inverter unit configured to drive and control the rotating electrical machine;
a first heat exchange unit configured to exchange heat between the inverter unit and a refrigerant;
a reservoir in which the oil is stored, the reservoir being provided in a lower portion of the case; and
a second heat exchange unit configured to exchange heat between the oil stored in the reservoir and the refrigerant, wherein
the oil cooler exchanges heat between the oil and the refrigerant,
the case is provided with a refrigerant flow path configured to allow the refrigerant to flow through the first heat exchange unit, the oil cooler, and the second heat exchange unit in this order,
the refrigerant flow path includes
a first refrigerant flow path connecting the first heat exchange unit and the oil cooler, and
a second refrigerant flow path connecting the oil cooler and the second heat exchange unit,
the first refrigerant flow path is disposed at a position overlapping at least one of the first counter gear mechanism and the second counter gear mechanism as viewed in the axial direction, and
the second refrigerant flow path is disposed at a position overlapping at least the other of the first counter gear mechanism and the second counter gear mechanism as viewed in the axial direction.

7. The vehicular drive device according to claim 1 or 2, wherein
a direction along the first axis is an axial direction, one side in the axial direction is a first axial side, and the other side in the axial direction is a second axial side,
the vehicular drive device further comprises a case housing the rotating electrical machine, the reduction mechanism, and the differential gear mechanism,
the case includes an intermediate wall supporting at least one of the rotor, the reduction mechanism, and the differential gear mechanism inside the case,
the intermediate wall includes a portion disposed on the second axial side of the third gear, and a portion disposed on the first axial side of the fourth gear, and
the third gear and the fourth gear pass through the intermediate wall to mesh with each other.
